# EUROPEAN PATENT APPLICATION

(11) **EP 0 630 828 A1**
(43) Date of publication of application: **28.12.1994**
(21) Application number: 94201549.6
(22) Date of filing: 01.06.1994
(51) Int. Cl.: B65D 81/34, A23L 1/217, A23L 1/01

(54) **Packed, fryable food products**

(30) Priority: 21.06.1993 EP 93201770
(71) Applicant: UNILEVER N.V., NL-3000 DK Rotterdam (NL); UNILEVER PLC, London EC4P 4BQ (GB)
(72) Inventor: van Oosten, Cornelis Willem, Unilever Research, NL-3133 AT Vlaardingen (NL)
(74) Representative: Hartong, Richard Leroy

(57) **Abstract**

The invention concerns packed, fryable food products wherein a pre-portioned amount of food product is packed in a porous wrapping container provided with openings, enabling the passage of oil but preventing the passage of parts of the fried food product.

## Description

Frying of fryable food products, in particular of snacks, is well known. Depending on the type of food products, two problems might arise:
The first problem is associated with the fact that the food product, when brought into the frying oil used for the frying, does not float but sinks to the bottom of the container in which the frying oil is heated. The fried food product is therefore difficult to locate in the frying oil, which might even lead to over-frying of the product.

The second problem is associated with the lifetime of the frying oil. During frying of the food products, both when these products are provided with a coating layer comprising bread crumbs and when these products are provided with a coating layer originating from batter, parts of this coating layer will be removed and will contaminate the frying oil. When these parts are not removed quickly and completely, they will reduce the lifetime of the frying oil. In order to cope with the above-mentioned problems, the frying oils had to be filtrated at least once a day.

A similar problem will occur during the frying of chips since the smaller chip particles cannot be sufficiently removed from the oil and will therefore contaminate the frying oil.

The presence of the above-mentioned contaminations in frying oils can also cause small black stains to appear on the fried products; this is a nuisance, in particular when partially fried products are made, since the customer does not appreciate such products.

We have now conducted a study in order to find a solution for the above-mentioned problems. This study has resulted in our invention. Accordingly, our invention concerns packed, fryable food products, preferably provided with a coating layer, comprising batter and/or bread crumbs wherein a pre-portioned quantity of the food products is packed in a closed, wrapping container of porous material provided with openings of such a size that, upon frying of the packed products, the oil can freely enter the packed food products while any material removed from the food products during frying remains within the wrapping container.

Fryable food products that can be packed according to the invention include all kinds of fryable snacks, such as battered meat pieces, e.g. battered fish, such as fish fingers or fish fillets, battered chicken pieces or battered pork pieces; battered ragout, such as croquettes or rissoles; small rissoles served as appetizers (bitterballen), skewered slices of meatball alternated with onion rings (berepoten, bereklauwen, berehappen), skewered, roughly pear-shaped, breaded chicken and beef (Lihanboutjes); fried-rice balls, fried-rice portions, chow mein balls, chow mein portions; but also spring rolls, battered vegetables, such as mushrooms, or chips. Many of the above-mentioned products are provided with a coating layer comprising bread crumbs. Bread crumbs typically have a particle size between 0.1 and 5 mm. Since these particles are removed during frying, the size of the openings of the wrapping container must be such that these small particles are collected and kept within the wrapping container so that they can be removed from the oil when the fried products are removed therefrom.

Although the wrapping container may have any shape or size, a preference is expressed for wrapping containers in the form of a net having 0.01-2 mm mesh size. If, however, the fryable food product does not comprise bread crumbs, the size of the openings of the wrapping container may be bigger, e.g. 0.05-5 mm. Wrapping containers of this type are particularly suited for food products having a continuous coating layer made from batter. The material from which the container can be made may be any material capable of withstanding the conditions of heating (i.e. 150-350°C) in an oily environment. Preferred materials, however, are metal wire, paper, cotton or sisal.

A very convenient form of the wrapping container is one consisting of perforated material, in particular paper, with perforations of 0.01-5 mm diameter.

Although the wrapping container may be made from woven and non-woven materials, a preference is expressed for the use of woven materials of 0.01-5 mm average mesh size. If non-woven materials are used, a preference is expressed for the use of non-woven materials which are provided with small openings caused by treatment with small pins.

So that the packed, fryable food products can be handled in a convenient way, the wrapping container may be provided with means such as a rope or a cord of attaching the container to other means of positioning the container in the frying oil during frying.

The invention also concerns a method for prolonging the lifetime of a frying oil by preventing sedimentation from appearing in the frying oil by :
i) packing a pre-portioned amount of fryable food products in a wrapping container of a porous material;
ii) frying of the food products while these are being packed in the wrapping container;
iii) removal of the fried food products by removal of the wrapping container from the oil.

The lifetime can even be further extended by incorporation of one or more antioxidants in either the coating layer of the fryable food product or in the material used for the wrapping container (or both). This incorporation of antioxidants, preferably tocopherols, can easily be achieved by impregnation of the material involved. In the same way, the material of the container can be impregnated with flavours.

The invention therefore also concerns packed, fryable food products according to the invention wherein either the coating layer of the food products and/or the wrapping container for these products has (have) an increased level of antioxidants.

## Claims

1. Packed, fryable food products, preferably provided with a coating layer, comprising batter and/or bread crumbs wherein a pre-portioned quantity of the food products is packed in a closed, wrapping container of porous material provided with openings of such a size that, upon frying of the packed products, the oil can freely enter the packed food products while any material removed from the food products during frying remains within the wrapping container.

2. Packed, fryable food products according to Claim 1, wherein the wrapping container is a net of 0.01-2 mm mesh size.

3. Packed, fryable food products according to Claim 1 or 2, wherein the wrapping container is made from metal wire, paper, cotton or sisal.

4. Packed, fryable food products according to Claim 2, wherein the food product is a fryable food product provided with a coating comprising bread crumbs having a particle size of 0.1-5 mm.

5. Packed, fryable food products according to Claim 1, wherein the wrapping container is a net of 0.05-5 mm mesh size.

6. Packed, fryable food products according to Claim 5, wherein the fryable food product is provided with a continuous coating layer made from batter.

7. Packed, fryable food products according to Claim 1, wherein the wrapping container consists of a perforated material with perforations of 0.01-5 mm diameter.

8. Packed, fryable food products according to Claims 1-6, wherein the wrapping container is a woven material of 0.01-5 mm average mesh size.

9. Packed, fryable food products according to Claims 1-8, wherein the wrapping container is provided with means of attaching the container to other means of positioning the container in the frying oil during frying.

10. Packed, fryable food products according to Claims 1-9, wherein the coating layer of the food product and/or the material used for the wrapping container has (have) an increased level of antioxidants.

11. Method for prolonging the lifetime of a frying oil by preventing sedimentation from appearing in the frying oil by :
i) packing a pre-portioned amount of fryable food products in a wrapping container of a porous material;
ii) frying of the food products while these are being packed in the wrapping container;
iii) removal of the fried food products by removal of the wrapping container from the oil.
